# EUROPÄISCHE PATENTSCHRIFT

(11) **EP 2 218 196 B1**
(45) Veröffentlichungstag und Bekanntmachung des Hinweises auf die Patenterteilung: **01.08.2018**
(21) Anmeldenummer: 08853284.1
(22) Anmeldetag: 28.10.2008
(51) Int. Cl.: H01S 3/30, H01S 3/00, H01S 3/067, H01S 3/094

(54) **KASKADIERTE SEITENBANDERZEUGUNG MIT SBS DISPERSIONSKONTROLLE DER SIGNALPROPAGATION**
CASCADE SIDEBAND GENERATION WITH SBS DISPERSION CONTROL OF SIGNAL PROPAGATION
PRODUCTION DE BANDE LATÉRALE EN CASCADE À CONTRÔLE DE LA DISPERSION DE BRILLOUIN STIMULÉE DE LA PROPAGATION DE SIGNAL

(30) Priorität: 30.11.2007 DE 102007058049
(43) Veröffentlichungstag der Anmeldung: 18.08.2010
(73) Patentinhaber: Deutsche Telekom AG, 53113 Bonn (DE)
(72) Erfinder: HENKER, Ronny, 04277 Leipzig (DE); SCHNEIDER, Thomas, 14552 Michendorf OT Wilhelmshorst (DE)
(74) Vertreter: Braun-Dullaeus, Karl-Ulrich
(86) Internationale Anmeldenummer: PCT/DE2008/001769
(87) Internationale Veröffentlichungsnummer: WO 2009/067973

(56) Entgegenhaltungen:
- WO-A-2007/127356
- DE-A1-102005 054 379
- JP-A- 11 015 032
- US-A1- 2002 196 532
- US-B1- 6 556 340
- SCHNEIDER TH ET AL: "Adapting Brillouin spectrum for slow light delays" ELECTRONICS LETTERS, IEE STEVENAGE, GB, Bd. 43, Nr. 12, 7. Juni 2007 (2007-06-07), Seiten 682-683, XP006028944 ISSN: 0013-5194

## Beschreibung

Die Erfindung betrifft ein Verfahren zur Erzeugung von Laserlicht mit mehreren spektralen Bändern. Die Erfindung betrifft gleichsam besonders vorteilhafte Einsatzgebiete des Verfahrens sowie ein System zur Umsetzung des Verfahrens.

Generell hat das Licht eines Lasers zunächst nur ein spektrales Band. Es ist also solange der Laser keine Pulse erzeugt monochromatisch, wobei bestimmte Laser durchaus Licht mehrerer Wellenlängen, respektive mehrerer Frequenzen, in bemerkenswerter Intensität emittieren können. Die emittierten Wellenlängen sind für den jeweiligen Laserprozess spezifisch und hängen von dem optisch aktiven Material und dem Resonatror ab. Die Wellenlängen fester Laserquellen können jedoch durch Modulation verändert werden, indem beispielsweise verschiedene Moden angeregt und in ihrer Intensität "gezüchtet" werden. Außerdem sind durchstimmbare Laserquellen mit verschieblicher aber verhältnismäßig instabiler Emissionswellenlänge bekannt. Im Übrigen sei an dieser Stelle darauf hingewiesen, dass die Begriffe "Wellenlänge" und "Frequenz" nachfolgend synonym verwendet werden, da sie sich bekanntermaßen ineinander umrechnen lassen.

Für Laserlicht gibt es eine Vielzahl von Anwendungen, von denen eine der Einsatz als Pumpstrahlung ist. Insbesondere kann Laserlicht kontrollierter Frequenz als Pumpstrahlung zur Anregung von stimulierter Brillouin Streuung ("SBS") eingesetzt werden. SBS ist ein nichtlinearer Effekt, der bei der Ausbreitung von Laserlicht in Glasfasern beobachtet wird und der auf der Streuung von Photonen an Gitterschwingungen ("Phononen") basiert. Nichtlineare Effekte dieser Art beeinflussen die Qualität in der optischen Nachrichtenübertragung, wobei ihr Einfluss von der Leistung des Nachrichtensignals abhängt. Dabei ist die SBS der Effekt mit dem kleinsten Schwellwert.

Die SBS basiert auf der Wechselwirkung zweier sich in entgegengesetzter Richtung ausbreitender Wellen, nämlich einer starken Pumpwelle und einer schwachen Probewelle. Bei Energie- und Impulserhaltung, respektive wenn die Frequenz- und Phasenanpassungsbedingung erfüllt sind, wird in der Faser eine akustische Welle erzeugt, an der Photonen der Pumpwelle zur Probewelle hin gestreut werden, was unter bestimmten Bedingungen zu einer stimulierten Wechselwirkung führt. Die SBS kann somit als Verstärkungsprozess beschrieben werden, bei dem die starke Pumpwelle mit der Frequenz *fₚ* in der ihr entgegengesetzten Richtung einen schmalbandigen Gewinn in einem spektralen Bereich um fₚ - f_{B} (Stokes) und einen Verlust um *fₚ* + f_{B} (anti Stokes) erzeugt. Dabei ist f_{B} die Frequenz der generierten akustischen Welle.

Die beiden Peaks, der Brillouin Verlust und der Brillouin Gewinn, haben gegenüber der Pumpwelle eine Frequenzverschiebung; die so genannte Brillouin Verschiebung f_{B}. Die Frequenzverschiebung beträgt beispielsweise bei Wellenlängen von 1550 nm in Standard Singlemode Glasfasern (SSMF) etwa 11 GHz. Die natürliche Bandbreite der Brillouin Streuung, also die des Gewinns und Verlustes, ist klein und beträgt zum Beispiel für unmoduliertes Pumplicht in SSMF ungefähr 30 MHz. Somit kann innerhalb des Brillouin Gewinns einer Pumpwelle eine gegenläufige Signalwelle verstärkt werden, wenn sie gegenüber der Pumpwelle im Frequenzbereich um f_{B} nach unten verschoben und ihre Bandbreite geringer ist. Hierbei gibt die Pumpwelle ihre Leistung an die Signalwelle ab und verstärkt diese. Gleichermaßen findet eine Dämpfung der Signalwelle statt, wenn sie im Frequenzbereich um f_{B} nach oben verschoben ist, d. h. sich das Spektrum der Signalwelle innerhalb des Brillouin Verlustes der Pumpwelle befindet. Dabei entzieht die Pumpwelle der Signalwelle die Leistung.

Unter anderem kommt die SBS als Verstärker und Filter für die Generierung von Signalen Radiofrequenzbereich, als Verstärker (siehe DE 10 2005 054 379 A1) und Filter für eine hochauflösende optische Spektroskopie (siehe DE 10 2005 040 968 A1) oder, wie in DE 10 2006 052 860 A1 beschrieben ist, als Element zur Veränderung der Signalgeschwindigkeit in verschiedenen Materialien zur Anwendung. Zur Veränderung der Geschwindigkeit sich in Ausbreitungsrichtung in einer Faser bewegender Signale wird in entgegengesetzter Richtung Pumpstrahlung in die Faser eingekoppelt, die einen Brillouin Gewinn sowie einen Brillouin Verlust erzeugt. Für die meisten Anwendungsfälle ist die "natürliche" spektrale Form der SBS allerdings nicht ausreichend.

Bei dem Effekt der Verzögerung ("Slow-Light") respektive der Beschleunigung ("Fast-Light") wird die SBS dazu verwendet, den Gruppenbrechungsindex und damit die Gruppengeschwindigkeit in optischen Fasern zu verändern. Je nach Form und Verlauf des Brillouin Spektrums sind die möglichen positiven und/oder negativen Zeitverzögerungen sowie die entstehenden Signalverzerrungen unterschiedlich groß. Um eine möglichst große Zeitverzögerung bei kleiner Verzerrung zu erreichen, muss das Gewinnspektrum verbreitert und mit SBS Verlustspektren überlagert werden.

Die JP 11015032 offenbart einen optischen Frequenzumwandler. Eine optische Faser kann gestreutes Licht erzeugen, welches über ein Abschlusseinrichtung zurückgesendet und über einen Zirkulator in einen weiteren Pfad eingespeist wird. Mit der Vorrichtung soll eine Lichtquelle für das Wellenlängen-Multiplexing bereitgestellt werden.

Es besteht somit ein Bedarf an Systemen, die Pumplicht mit unterschiedlicher spektraler Verteilung erzeugen. Das wird bislang mit einzelnen Laserquellen bewerkstelligt, die ohne Synchronisation betrieben und einzeln angesteuert werden. Aus der DE 10 2005 054 379 A1 ist bereits ein solches Verfahren zur Überlagerung mehrerer einzelner Brillouin Spektren bekannt. Dort werden die einzelnen Teilspektren durch mehrere separate Pumpquellen erzeugt und bei der Überlagerung die Brillouin Gewinnspektren mit identischen Frequenzverläufen benutzt. Auf Grund von Temperaturschwankungen besitzt jedoch jeder der benutzten Laser eine gewisse Schwankung in seiner Emissionswellenlänge, was bei fehlender Synchronisation zu einem Driftverhalten der Laser relativ zueinander führt. Dieses Verhalten macht eine genaue Justierung der einzelnen SBS Spektren schwierig. Zudem wird für jedes zusätzliche Brillouin Spektrum ein zusätzlicher Laser benötigt, was mit entsprechenden Kosten einhergeht.

Die Aufgabe der Erfindung ist es nunmehr, ein Verfahren zu schaffen, das sich mit einfachen Mitteln kostengünstig umsetzen lässt und mit dem sich bei hoher Stabilität auch komplexe Laser-Spektren erzeugen lassen. Zudem ist es Aufgabe der Erfindung, ein System zur Umsetzung des Verfahrens zu schaffen.

Diese Aufgaben werden durch das Verfahren nach Anspruch 1 und die Verwendung nach Anspruch 4 gelöst. Vorteilhafte Ausgestaltungen sind in den jeweiligen Unteransprüchen genannt.

Der wesentliche Grundgedanke der Erfindung liegt zusammengefasst darin, aus der Frequenz des einen Lasers zunächst mindestens zwei Frequenzpeaks zu machen und diese beiden dann getrennt abzuzweigen, um jeden der Frequenzpeaks getrennt durch Vervielfältigung und Dämpfung oder Verstärkung zu bearbeiten und die Resultate am Ende wieder zusammen zu führen. Erfindungsgemäß wird dazu von der Trägerfrequenz der sich im Hauptpfad ausbreitenden Laserstrahlung mindestens ein Seitenband erzeugt und dieses mittels eines Strahlteilers in einen separaten Nebenpfad eingekoppelt. Der andere Peak, ob Trägerfrequenz oder weiteres Seitenband, wird in den anderen Pfad gekoppelt. In zumindest einem der Pfade werden wiederum Seitenbänder angeregt. Am Ende werden die Pfade durch einen Koppler wieder zu einem gemeinsamen Strahlengang vereinigt, wobei die angeregten Bänder des Spektrums ausbilden.

Erfindungsgemäß werden zwei Seitenbänder der Trägerfrequenz des einen Lasers erzeugt und einzeln "bearbeitet". Dazu werden zunächst aus dem Licht der einen Laserquelle zwei bezüglich der Grundfrequenz verschobene Seitenbänder, insbesondere mittels eines Modulators, erzeugt. Jedes der Seitenbänder wird einem eigenen einen Nebenpfad bildenden Lichtleiter zugeführt, wobei zumindest eines der Seitenbänder innerhalb seines Lichtleiters wiederum durch Erzeugung weiterer Seitenbänder in der Anzahl der Spektrallinien "vervielfältigt" wird. Die einzelnen voneinander separierten Teilwellen werden in den verschiedenen Nebenpfaden des Aufbaus einzeln in ihrer spektralen Form verändert, z.B. verbreitert, verschmälert, verstärkt oder gedämpft. Alle solchermaßen erzeugten Seitenbänder respektive Nebenseitenbänder werden letztendlich zu einem gemeinsamen Strahl mit der erzeugten Frequenzverteilung zusammengeführt. Da diese Art der Erzeugung durch Manipulation der Seitenbänder in getrennten Nebenpfaden geschieht, ist sie nicht an die Symmetrie um die zentrale Trägerfrequenz gebunden. Daher lassen sich mit dem erfindungsgemäßen Verfahren im Prinzip beliebige Spektren erzeugen, wobei der Anzahl der Nebenpfade kaum Grenzen gesetzt sind.

Nach der Zusammenführung der bearbeiteten Teilwellen wird dieses Spektrum als Pumpwellen in eine optische Glasfaser eingekoppelt, wobei jedes spektrale Band jeweils einen Brillouin Gewinn und einen Brillouin Verlust erzeugt. Auf Grund des Abstandes der Wellen überlagern sich die Gewinne und Verluste benachbarter Pumpwellen zu einem Brillouin Gesamtspektrum. Da die spektrale Form der einzelnen Pumpwellen beliebig variiert werden kann, lässt sich ein beliebiges Spektrum einstellen, in welchem ein von der anderen Seite der Faser eingekoppeltes Signal verstärkt oder gedämpft werden kann.

Dabei muss für einen Verstärker hoher Bitraten die Halbwertsbandbreite der SBS erweitert werden. Für die hochauflösende optische Spektroskopie wird dagegen zum einen ein sehr schmales Verstärkungs- bzw. Filterspektrum benötigt. Zum anderen muss ein möglichst hoher Messdynamikbereich zwischen dem Signalpegel und dem Rauschpegel zur Verfügung gestellt werden. Dieser kann durch eine Überlagerung eines Brillouin Gewinnspektrums mit einem verbreiterten SBS Verlustspektrum ermöglicht werden.

Dadurch, dass ein beliebiger spektraler Verlauf mit nur einer einzigen Laserquelle erzeugt wird, kann auf die Verwendung mehrerer unabhängiger, separat angesteuerter Laserquellen verzichtet werden. Mit den resultierenden Spektren lassen sich vielfältige Anwendungen realisieren, die sich nicht unbedingt der SBS bedienen müssen. Mit den Mechanismen der SBS lassen sich insbesondere Verstärker, Abschwächer oder Filter mit variablen Spektren realisieren, die für verschiedene Anwendungen, wie zum Beispiel hochauflösende optische Spektroskopie, Filterung von Signalen, Erzeugung von Millimeterwellen und Slow- und Fast-Light genutzt werden können.

Dass die Erzeugung des Spektrums mit nur einer einzigen Laserquelle möglich ist, bringt verschiedene Vorteile. So lassen sich auf diese Weise beispielsweise ein Brillouin Verstärker mit variabler Verstärkungskennlinie oder ein Brillouin Filter mit beliebiger Filterkurve, beispielsweise als Bandpass- oder Notchfilter, realisieren.

Dadurch, dass die Spektren durch eine einzige Laserquelle generiert werden, unterliegen die einzelnen SBS Gewinn- und Verlustspektren der gleichen Wellenlängenschwankung und bleiben relativ zueinander konstant. Dadurch kann das gesamte System unabhängig von Temperatur- bzw. Wellenlängenschwankungen des Pumplasers betrieben werden und zeichnet sich durch eine hohe Stabilität aus.

Ein wesentlicher Vorteil des Systems ist, neben der hohen Stabilität, die einfache Realisierung mit Standardkomponenten der optischen Nachrichtentechnik, die in hoher Stückzahl und preiswert herstellbar sind. Das System ist robust und kann durch eine Veränderung des Abstandes der einzelnen Pumpwellen einfach an verschiedene Glasfasern mit unterschiedlichen Brillouin Verschiebungen angepasst werden. Durch die Einsparung zusätzlicher Laser und deren Ansteuerung wird der Aufwand zur Erzeugung des Spektrums deutlich geringer und die Handhabung des Systems einfacher.

Als Mittel zur Erzeugung von Seitenbändern kann ein unabhängig ansteuerbarer Modulator verwendet werden.

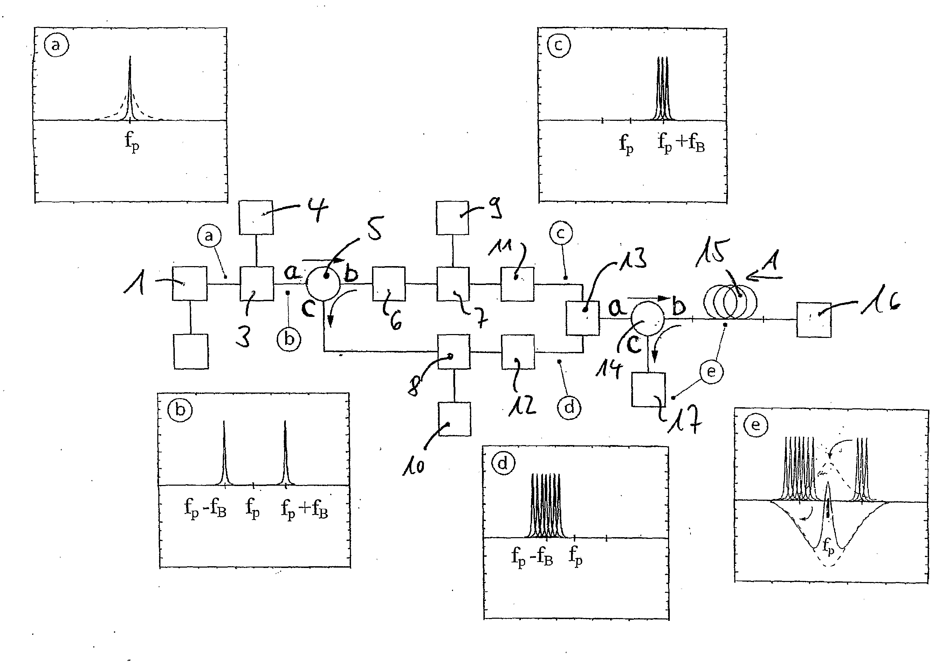

Nachfolgend wird die Erfindung anhand der Figur näher erklärt:
Das von einem kohärenten Pumplaser 1 emittierte Licht einer bestimmten Wellenlänge, respektive der Trägerfrequenz (Spektrum a), wird zunächst einem einstellbaren Modulator 3, beispielsweise einem Mach-Zehnder Modulator, zugeführt. Der Modulator 3 wird von einem Generator 4 mit einer variablen Frequenz angesteuert, so dass ein oberes und ein unteres Seitenband im symmetrischen Abstand der Generatorfrequenz von der Trägerfrequenz des kohärenten Lichtes entsteht. Dabei erfolgt die Ansteuerung des Modulators in diesem Falle derart, dass die Trägerfrequenz unterdrückt wird und sich Seitenschwingungen (Seitenbänder) unterhalb und oberhalb der Trägerfrequenz ausbilden (Spektrum b). Damit entstehen aus einer einzigen Laserquelle zunächst mindestens zwei Peaks, die als Pumpwellen einsetzbar sind. Dabei ist es ausreichend, nur die erste obere und die erste untere Seitenschwingung anzuregen.

Diese beiden "Pumpwellen" werden einem optischen Zirkulator 5 zugeführt, der für die Wege a → b und b → c durchgängig ist, während er den Weg b → a sperrt. Über den Weg a → b werden die Pumpwellen in ein einstellbares Faser Bragg-Gitter 6 eingekoppelt, das die Pumpwelle mit der niedrigeren Frequenz reflektiert Diese gelangt über den Weg b → c des Zirkulators 5 auf den einen "unteren" Nebenpfad der Schaltung. Hingegen durchläuft die Pumpwelle mit der höheren Frequenz das Faser Bragg-Gitter 6 ungestört und verbleibt auf dem anderen "oberen" Nebenpfad.

In beiden Nebenpfaden werden die separierten Pumpwellen jeweils mittels der Modulatoren 7 und 8 moduliert. Für die Modulation können wiederum Mach-Zehnder Modulatoren oder auch Phasenmodulatoren zum Einsatz kommen. Diese werden von Generatoren 9 und 10 angesteuert, wobei die Spektren der Pumpwellen entsprechend deren Frequenz verbreitert werden. Durch die Anzahl der erzeugten Nebenseitenbänder wird die Breite des Spektrums bestimmt. In die Nebenpfade können noch Elemente 11 und 12 eingebracht werden, die optische Verstärker, beispielsweise Erbium-dotierte Faserverstärker (EDFA), oder optische Dämpfungsglieder sind und die verbreiterten Nebenseitenbänder zu verstärken oder zu dämpfen, so dass deren Leistungen variabel sind. Beispiele der am Ende der Nebenzweige erzeugten Spektren enthaltend die Nebenseitenbänder sind in den Spektren c) und d) zu erkennen.

Nach der Erzeugung der Nebenseitenbänder werden die beiden Nebenpfade durch einen Koppler 13, insbesondere einem 3-dB-Koppler, wieder zu einem gemeinsamen Strahlengang vereinigt, wobei die erzeugten Seitenbänder und Nebenseitenbänder nunmehr in Kombination ein gemeinsames Spektrum ausbilden.

Die Einkopplung des Spektrums in eine Glasfaser 15, in der sich ein optisches Signal in entgegengesetzter Richtung des Pfeiles A ausbreitet, geschieht über einen weiteren optischen Zirkulator 14 auf dessen Weg a → b. In der Glasfaser kommt es nun zur Erzeugung der SBS. Dabei erzeugt das "verbreiterte" Pumpspektrum mit der höheren Frequenz ein verbreitertes Brillouin Gewinn Spektrum, das um die Brillouin Verschiebung nach unten verschoben ist. Gleichfalls erzeugt das verbreiterte Pumpspektrum mit der niedrigeren Frequenz ein verbreitertes Brillouin Verlustspektrum, welches um die Brillouin Verschiebung nach oben verschoben ist. Der jeweils gleichzeitig erzeugte Verlust der ersten Pumpwelle und Gewinn der zweiten Pumpwelle haben dabei keinen Einftuss auf die Funktionsweise der Erfindung. Die erzeugten Brillouin Verlust- und Brillouin Gewinnspektren überlagern sich nun miteinander zu einem beliebigen Gesamtspektrum (Spektrum e). In diesem variablen Gesamtspektrum kann nun ein optisches Signal eines Lasers 16, das in entgegengesetzter Richtung zu den Pumpwellen in die Faser eingekoppelt wird, verstärkt, gedämpft, verzögert oder beschleunigt werden. Dieses durch SBS beeinflusste Signal gelangt über den optischen Zirkulator 14 von Port b nach Port c, wo es zum Beispiel durch einen optischen Spektrumanalysator oder von einer Photodiode 17 detektiert werden kann.

Auf diese Weise lässt sich aus einer einzigen Laserquelle 1 ein beliebiges Spektrum e) herstellen, das für die jeweilige Anwendung maßgeschneidert ist. Beispiele dafür sind Bandpass- und Notchfilter mit variablen Durchlass- sowie Sperrbereichen oder spezielle Gewinnverläufe bzw. Gewinnanstiege für die Verzögerung und Beschleunigung von optischen Signalen. Mittels eines Signalgenerators 2 ist es möglich, den kohärenten Pumplaser 1 zu modulieren und so das Pumpspektrum von vornherein auf eine bestimmte Bandbreite zu verbreitern (gestrichelte Linie in Spektrum a). Damit kann auf den Modulator in einem der beiden optischen Nebenpfade verzichtet werden.

Dabei ist das Verfahren keineswegs auf zwei Pumpwellen beschränkt. Durch die Modulation des Pump-Trägersignals durch den Modulator 3 kann die Anzahl der Seitenschwingungen erweitert werden. Diese müssten dann durch zusätzliche Faser Bragg-Gitter 6 auf weitere optische Pfade zur separaten Bearbeitung (Verbreiterung, Verstärkung) verteilt werden. Zudem können auch andere Verfahren zur Frequenzkammerzeugung genutzt werden. Zum Einsatz können beispielsweise Fabry-Perot Laser oder der nichtlineare Effekt der Vier-Wellen-Mischung kommen. Die generelle Funktionsweise der Erfindung bleibt hierbei erhalten.

Zur Erklärung des Spektrums e): Nachdem die beiden Pfade wieder zu einem Strahlengang vereint worden sind, werden sie in die Glasfaser eingekoppelt. Dort erzeugt nun jedes der beiden Bänder der Spektren c) und d) Brillouin Streuung, insbesondere jeweils einen im Frequenzbereich nach unten verschobenen Brillouin Gewinn und einen im Frequenzbereich nach oben verschoben Verlust. In Spektrum e) ist der Brillouin Gewinn des oberen Seitenbandes als obere gestrichelte Linie und der Brillouin Verlust des unteren Seitenbandes als untere gestrichelte Linie gezeigt. Aufgrund der spektralen Verbreiterung der beiden Bänder sind auch der jeweilige Brillouin Gewinn und der Verlust entsprechend verbreitert. Durch den Abstand der beiden Seitenbänder in der doppelten Brillouin Verschiebung liegen der Verlust und der Gewinn übereinander und zwar so, dass sich ihre Maxima genau auf der Frequenz f_{P} befinden. In der Glasfaser überlagern sich nun die beiden zu einem resultierenden Spektrum (durchgezogene Linie in der Mitte). Durch die variable Einstelllung der Bandbreite, des Abstandes und der Höhe der beiden Seitenbänder ist es möglich, das Gesamtspektrum nach Belieben zu formen. Innerhalb der Bandbreite des resultierenden Brillouin Spektrums, insbesondere bei der Frequenz f_{P}, kann ein optisches Signal von der anderen Seite der Glasfaser eingekoppelt und dieses je nach Anwendung sowie Form des Brillouin Spektrums beispielsweise verstärkt, gedämpft, beschleunigt, verzögert oder gefiltert werden. Dieses Signal kann am Ausgang des Zirkulators 15 abgenommen und mittels des Detektors 17, beispielsweise eines optischen Spektrum Analysators oder einer Photodiode, aufgenommen werden.

## Patentansprüche

1. Verfahren zur Erzeugung von Laserlicht mit einem Spektrum enthaltend verschiedene Bänder,
wobei von der Trägerfrequenz einer sich in einem Hauptpfad ausbreitenden Laserstrahlung (1) mindestens ein Seitenband erzeugt wird, so dass zumindest zwei Frequenzpeaks vorhanden sind,
wobei das Seitenband mittels eines Strahlteilers (5,6) in einen separaten Nebenpfad eingekoppelt wird, während der andere Frequenzpeak im Hauptpfad verbleibt,
wobei in zumindest einem der Pfade wiederum Seitenbänder der Strahlung angeregt werden,
wobei die Pfade durch einen Koppler (13) wieder zu einem gemeinsamen Strahlengang vereinigt werden, wobei die angeregten Bänder das Gesamtspektrum ausbilden,
**dadurch gekennzeichnet,**
**dass** die im gemeinsamen Strahlengang vereinte Strahlung als Pumpstrahlung einem Lichtleiter (15) zugeführt wird, in dem sich auf eine Trägerfrequenz modulierte Lichtsignale mit Gruppengeschwindigkeit in entgegengesetzter Richtung (A) ausbreiten,
und **dass** die Pumpstrahlung ein erstes und ein zweites Band aufweist, wobei die Frequenz der Bänder derart verschoben ist, dass ein Brillouin Gewinnspektrum des ersten Bandes ein Brillouin Verlustspektrum des zweiten Bandes zumindest teilweise überlagert.

2. Verfahren nach Anspruch 1,
**dadurch gekennzeichnet,**
**dass** mittels eines ersten Modulators (3,4) mindestens zwei Seitenbänder der Trägerfrequenz angeregt werden, wobei das untere Seitenband zu kleineren und das obere Seitenband zu höheren Frequenzen verschoben ist.

3. Verfahren nach Anspruch 2,
**dadurch gekennzeichnet,**
**dass** die beiden Seitenbänder durch einen Strahlteiler (5,6) auf zwei verschiedene Nebenpfade verteilt werden, wobei in zumindest einem der Nebenpfade wiederum mindestens zwei Nebenseitenbänder des Seitenbandes mittels eines Modulators (7,8) angeregt werden.

4. Verwendung eines Systems durch Durchführung eines Verfahrens nach einem der vorherigen Ansprüche, das System umfasst,
einen Laser (1) zur Erzeugung von Laserlicht einer Trägerfrequenz, das in einem zuleitenden Strahlengang, insbesondere einer Faser, geführt wird, ein im zuleitenden Strahlengang angeordnetes Mittel (3,4) zur Erzeugung mindestens eines Seitenbandes der Trägerfrequenz,
einen Strahlteiler (5,6), der das Seitenband einem separaten Nebenpfad zuführt,
zumindest ein in einem der Pfade angeordnetes Mittel (7,8) zur Erzeugung zweier Seitenbänder zu der darin befindlichen Frequenz, einen Koppler (13) zur Vereinigung der Pfade und mit einem gemeinsamen abführenden Strahlengang, insbesondere einer Faser.

5. Verwendung nach Anspruch 4,
**dadurch gekennzeichnet,**
**dass** in jedem der Pfade ein Mittel zur Erzeugung von Seitenbändern angeordnet ist.

6. Verwendung nach Anspruch 4,
**dadurch gekennzeichnet,**
**dass** der Strahlteiler von einem Zirkulator (5) gebildet wird, hinter dem ein selektiv reflektierender Reflektor, insbesondere ein Faser Bragg Gitter (6), angeordnet ist.

7. Verwendung nach einem der Ansprüche 4 bis 6,
**dadurch gekennzeichnet,**
**dass** jeweils hinter dem in einem Nebenpfad befindlichen Modulator (7,8) ein Dämpfungs- und/oder Verstärkungsglied (11,12) angeordnet ist.

## Claims

1. Method for generating laser light with a spectrum that contains different bands,
wherein at least one sideband is generated from the carrier frequency of a laser beam (1) that is propagated in a main path so that at least two frequency peaks are present,
wherein the sideband is coupled into a separate secondary path by means of a beam splitter (5, 6), while the other frequency peak remains in the main path,
wherein sidebands of the beam are likewise excited in at least one of the paths,
wherein the paths are combined again by a coupler (13) to form a common beam path, where the excited bands form the overall spectrum,
**characterized in that**
the radiation combined in the common beam path is fed as pumped radiation to an optical fibre (15), in which light signals modulated onto a carrier frequency propagate in the opposite direction (A) at the group velocity,
and that the pumped radiation has a first and a second band, wherein the frequency of the bands is shifted in such a way that a Brillouin gain spectrum of the first band is at least partially superimposed on a Brillouin loss spectrum of the second band.

2. Method according to Claim 1,
**characterized in that**
by means of a first modulator (3,4) at least two sidebands of the carrier frequency are excited, wherein the lower sideband is shifted to lower and the upper sideband to higher frequencies.

3. Method according to Claim 2,
**characterized in that**
the two sidebands are distributed over two different secondary paths by a beam splitter (5, 6), wherein in at least one of the secondary paths at least two secondary sidebands of the sideband are in turn excited by means of a modulator (7, 8).

4. Use of a system by carrying out a method according to any one of the preceding claims, wherein the system comprises
a laser (1) for generating laser light at a carrier frequency, which is guided in an incoming beam guide, in particular a fibre,
a means (3, 4) arranged in the incoming beam guide for generating at least one sideband of the carrier frequency,
a beam splitter (5, 6), which feeds the sideband to a separate secondary path,
at least one means (7, 8) arranged in one of the paths for generating two sidebands with respect to the frequency located therein,
a coupler (13) for combining the paths and having a common output beam guide, in particular a fibre.

5. Use according to Claim 4,
**characterized in that**
a means for generating sidebands is arranged in each of the paths.

6. Use according to Claim 4,
**characterized in that**
the beam splitter is formed by a circulator (5), behind which a selectively reflecting reflector, in particular a fibre Bragg lattice (6), is arranged.

7. Use according to any one of Claims 4 to 6, **characterized in that**
an attenuation and/or amplification element (11, 12) is arranged behind the modulator (7, 8) located in each secondary path.

## Revendications

1. Procédé de production de lumière laser avec un spectre contenant différentes bandes,
au moins une bande latérale étant produite par la fréquence porteuse d'un faisceau laser (1) se propageant dans une trajectoire principale de telle sorte qu'au moins deux pics de fréquence sont présents,
la bande latérale étant injectée dans une trajectoire secondaire séparée au moyen d'un séparateur de faisceau (5,6), alors que l'autre pic de fréquence reste dans la trajectoire principale,
les bandes latérales du faisceau étant par ailleurs activées dans au moins une des trajectoires,
les trajectoires étant à nouveau réunies par un coupleur (13) dans un trajet de faisceau commun, les bandes activées constituant le spectre total, **caractérisé en ce que**
dans le trajet de faisceau commun, le faisceau uni est acheminé en tant que rayonnement de pompage vers un guide de lumière (15) dans lequel des signaux lumineux modulés sur une fréquence porteuse se propagent à une vitesse de groupe dans la direction opposée (A),
et **en ce que** le rayonnement de pompage comporte une première et une deuxième bande, la fréquence des bandes étant déplacée de telle sorte qu'un spectre de gain de Brillouin de la première bande vient superposer au moins en partie un spectre de perte de Brillouin de la deuxième bande.

2. Procédé selon la revendication 1, **caractérisé en ce qu'au** moyen d'un premier modulateur (3,4) au moins deux bandes latérales de la fréquence porteuse sont activées, la bande latérale inférieure étant déplacée vers des fréquences plus faibles et la bande latérale supérieure vers des fréquences plus élevées.

3. Procédé selon la revendication 2, **caractérisé en ce que** les deux bandes latérales sont réparties par un séparateur de faisceau (5,6) sur deux trajectoires secondaires différentes, au moins deux bandes latérales secondaires de la bande latérale étant par ailleurs activées par un modulateur (7,8) dans au moins une des trajectoires secondaires.

4. Utilisation d'un système en exécutant un procédé selon l'une quelconque des revendications précédentes, le système comprenant,
un laser (1) pour produire de la lumière laser d'une fréquence porteuse, qui est guidée dans un trajet de faisceau arrivant, notamment une fibre,
un moyen (3,4) disposé dans le trajet de faisceau arrivant pour produire au moins une bande latérale de la fréquence porteuse,
un séparateur de faisceau (5,6) qui achemine la bande latérale vers une trajectoire secondaire séparée,
au moins un moyen (7,8) disposé dans une des trajectoires pour produire les deux bandes latérales à la fréquence se trouvant dedans,
un coupleur (13) pour réunir les trajectoires et avec un trajet de faisceau évacuant commun, notamment une fibre.

5. Utilisation selon la revendication 4, **caractérisée en ce que** dans chacun des trajectoires un moyen est disposé pour produire des bandes latérales.

6. Utilisation selon la revendication 4 **caractérisée en ce que** le séparateur de faisceau est formé d'un circulateur (5) derrière lequel est disposé un réflecteur à réflexion sélective, notamment un réseau Bragg à fibres (6) .

7. Utilisation selon l'une quelconque des revendications 4 à 6, **caractérisée en ce qu'**un élément d'amortissement et/ou de renfort (11,12) est respectivement disposé derrière le modulateur (7,8) se trouvant dans une trajectoire secondaire.
